Europäisches Patentamt

European Patent Office

Office européen des brevets

(19)

(11) Veröffentlichungsnummer: **0 062 192**
**A2**

(12) **EUROPÄISCHE PATENTANMELDUNG**

(21) Anmeldenummer. 82102206.8

(22) Anmeldetag: 18.03.82

(51) Int. Cl.³: **G 01 D 5/26**

(30) Priorität: 26.03.81 DE 3111905

(43) Veröffentlichungstag der Anmeldung: 13.10.82
Patentblatt 82/41

(84) Benannte Vertragsstaaten: **AT BE CH FR GB IT LI NL SE**

(71) Anmelder: Fraunhofer-Gesellschaft zur Förderung der angewandten Forschung e.V., Leonrodstrasse 54, D-8000 München 19 (DE)

(72) Erfinder: Kugler, Hans-Peter, Dipl.-Ing.,
Siedlerstrasse 34, D-7519 Zaisenhausen (DE)
Erfinder: Eisenreich, Norbert, Dr. Dipl.-Phys.,
Amselstrasse 16, D-7507 Pfinztal 1 (DE)
Erfinder: Liehmann, Wolfgang, Dipl.-Phys.,
Ziegeleistrasse 5, D-7500 Karlsruhe 41 (DE)

(74) Vertreter: Patentanwälte Dr.-Ing. Hans Lichti Dipl.-Ing.
Heiner Lichti Dipl.-Phys. Dr.Jost Lempert,
Postfach 410760 Durlacherstrasse 31,
D-7500 Karlsruhe 41(Grötzingen) (DE)

(54) Verfahren zur optischen Messung eines Weges.

(57) Es wird ein Verfahren zur optischen Messung des Weges eines bewegten Körpers vorgeschlagen, das einfach sein soll, keinen großen apparativen Aufwand erfordert, eine einfache Beziehung zwischen gemessenem Weg und erhaltener Meßgröße gewährleistet und eine hohe Auflösung zeigt. Hierzu ist erfindungsgemäß vorgesehen, daß mindestens ein Lichtstrahl durch ein Medium mit in Bewegungsrichtung veränderlicher optischer Dichte für das Licht der Lichtquelle unter einem endlichen Winkel zur Bewegungsrichtung gesandt wird und daß mittels des Detektors die Intensität des Lichtstrahls gemessen wird. Das erfindungsgemäße Verfahren kann beispielsweise zur Messung der Auslenkung einer Platte aufgrund von Druckwellen, der Messung von Schwingungen eines Körpers und ähnlichem eingesetzt werden

DR. INC. HANS LICHTI · DIPL.-INC. HEINER LICHTI
DIPL.-PHYS. DR. JOST LEMPERT
PATENTANWÄLTE

D-7500 KARLSRUHE 41 (GRÖTZINGEN) · DURLACHER STR. 31 (HOCHHAUS)
TELEFON (0721) 48511

6317/82

Fraunhofer-Gesellschaft zur Förderung der angewandten Forschung e.V.

Leonrodstraße 54

D-8000 MÜNCHEN 19

Verfahren zur optischen Messung eines Weges

- - - - - - -

Die Erfindung betrifft ein Verfahren zur optischen Messung eines Weges eines Körpers, wie einer Auslenkung, einer Schwingung eines Körpers oder dgl. mit mindestens einer Lichtquelle und mindestens einem Detektor.

Es werden eine Reihe von Verfahren zur Wegmessung, teilweise über den Umweg einer Weg-Zeitmessung, wie einer Messung der Beschleunigung, eingesetzt. Hierzu gehören zunächst Verfahren mittels Messung elektrischer Größen, wie Messung mittels Spannungsteilern und Drehpotentiometern, kapazitiven und induktiven Wegmessungen, zum Beispiel mittels Tauchankergeber, Differential-Tauchankergebern oder elektromagnetischer Impulsgeber. Weiterhin werden Laufzeitmessungen, wie mittels Ultraschall, Radar oder Lasern, und Phasenmessungen eingesetzt. Diese Verfahren weisen

- 2 -

Nachteile derart auf, daß sie entweder nicht rückwirkungsfrei sind, also durch die Verfahren bzw. bei diesen einzusetzenden Meßeinrichtungsteilen die Meßergebnisse verfälscht werden, und/oder diese Verfahren empfindlich gegen Umwelteinflüsse sind. Darüber hinaus sind die Verfahren hinsichtlich ihres Meßbereichs Einschränkungen unterworfen und erfordern regelmäßig aufwendige Apparaturen zur Signalerfassung und/oder Auswertung. Letzeres gilt insbesondere für ein optisches Wegaufnahmeverfahren, bei dem ein Lichtstrahl an einem digitalen optischen "Kamm" reflektiert wird und der Weg mittels einer digital-elektronischen Auswerteeinrichtung in Abhängigkeit vom erhaltenen Signal berechnet wird. Bei diesem Verfahren sind also in Bewegungsrichtung hintereinander entsprechend einer gewissen Codierung reflektierende und nichtreflektierende Flächen vorgesehen, die jeweils verschiedene Breite aufweisen können, beispielsweise ähnlich, wie die Strichmuster bei digital codierten Preisetiketten auf Konsumgütern, die optisch abgelesen werden. Dieses Verfahren weist nicht nur den Nachteil der Notwendigkeit einer aufwendigen Digitalelektronik zur Umsetzung der aufgenommenen digitalen Information in die gewünschte Information über den Weg, sondern darüber hinaus auch den Nachteil eines schlechten Auflösungsvermögens auf, da dieses durch die "Kammzähne" bzw. deren Abstände bestimmt ist, die nicht beliebig fein gewählt werden können.

Der Erfindung liegt daher die Aufgabe zugrunde ein einfaches Verfahren zur optischen Wegmessung zu schaffen, das unter höchster Auflösung eine einfache Beziehung zwischen Weg und erhaltener Meßinformation ergibt, so daß keine aufwendige Signalerfassungs- und Auswertungs-Apparatur bzw. Elektronik erforderlich ist.

- 3 -

Erfindungsgemäß wird die genannte Aufgabe dadurch gelöst, daß mindestens ein Lichtstrahl durch ein Medium mit in Bewegungsrichtung veränderlicher optischer Dichte für das Licht der Lichtquelle unter einem endlichen Winkel zur Bewegungsrichtung gesandt wird und daß mittels des Detektors die Intensität des Lichtstrahls gemessen wird. Die optische Dichte eines Körpers wird durch das Verhältnis in den Körper eintretender und austretender Intensität bestimmt, ist also dem Transmissionsgrad umgekehrt proportional. Mittels des erfindungsgemäßen Verfahrens können sowohl statische als auch dynamische Wegmessungen vorgenommen werden. Das erfindungsgemäße Verfahren ermöglicht Wegmessungen im Bereich von mehreren Metern bis hinunter in den Submikrometerbereich. Einschränkungen des Frequenzganges sind lediglich durch die obere Grenze des Detektors gegeben. Durch das erfindungsgemäße Verfahren ist es möglich, Lage und Wege eines zu messenden Objektes oder Körpers kontinuierlich zu erfassen. Als Lichtquelle kommen üblicherweise Laser in Betracht; als Detektoren können vorzugsweise Fotodioden, Sekundärelektronenvervielfacher, Fototransistoren oder dgl. eingesetzt werden. Mittels des erfindungsgemäßen Verfahrens ist es nicht nur möglich, Wege oder Ortsveränderungen von Objekten oder Körpern in einer vorgegebenen Richtung zu messen, sondern Bewegungen in einer Ebene oder im Raum. In diesem Falle werden im allgemeinen zwei oder drei optische Anordnungen geschaffen, bei denen die Strahlrichtungen vorzugsweise senkrecht aufeinanderstehen und die optische Dichteänderung der durchstrahlten Medien jeweils unter einem Winkel zueinander, der vorzugsweise ebenfalls jeweils ein rechter ist, erfolgt. Bei Bewegungsmessung in einer Ebene kann das durchstrahlte Medium auch so ausgestaltet sein, daß es in zwei unterschiedlichen Frequenzbereichen seine spektrale optische Dichte in unterschiedlichen, vorzugsweise aufeinander senkrecht stehenden Richtungen ändert und von zwei Lasern, die in den beiden erwähnten Frequenzbereichen arbeiten, durchstrahlt wird, wobei diesen beiden Lasern jeweils ein Detektor zugeordnet ist. Die räumliche Auflösung beim Einsatz des erfindungsgemäßen Verfahrens ist eine Funktion der Geometrie und Intensität des Lichtstrahls, des Dichtegradienten des Mediums sowie der Empfindlichkeit des Detektors und gegebenenfalls den Abmessungen einer möglicherweise im Strahlengang befindlichen Blende. Es kann, wie gesagt, eine Auflösung bis im Submikrometerbereich erzielt werden. Der obere Meßbereich ist durch die Abmessung des verwendeten Mediums gegeben. Während für große Auslenkungen die erhaltene Intensität exponentiell vom Absorptionskoeffizienten und der Dicke des Materials abhängt, kann die Intensität für kleine Auslegungen im Bereich der Dicke des Lichtstrahls linearisiert werden. Im Rahmen des erfindungsgemäßen Verfahrens kann der Lichtstrahl sowohl durch Blenden begrenzt oder auch durch Abbildungsoptiken geleitet und beispielsweise auf das Medium fokussiert werden. Im Rahmen der Erfindung kommt es lediglich auf eine Relativbewegung zwischen Meßanordnung und Körper bzw. Medium an.

Obwohl im Rahmen des erfindungsgemäßen Verfahrens die Anordnung derart erfolgen kann, daß der Detektor auf der der Lichtquelle gegenüberliegenden Seite des durchstrahlten Mediums angeordnet ist, kann gemäß einer bevorzugten Ausgestaltung vorgesehen sein, daß die der Lichtquelle abgewandte gegenüberliegende Fläche des Mediums verspiegelt ist und der Detektor auf der gleichen Seite des Mediums wie die Lichtquelle angeordnet ist.

Es ist im Rahmen des erfindungsgemäßen Verfahrens ohne weiteres möglich, mit einem konstanten optischen Dichtegradienten des Mediums in

Bewegungsrichtung des bewegten Körpers zu arbeiten. In bevorzugter Weise ist aber vorgesehen, daß das Medium einen veränderlichen optischen Dichtegradienten hat und insbesondere, daß die Dichte sich in Bewegungsrichtung logarithmisch verändert. Letzteres im Hinblick auf die erwähnte exponentielle Abhängigkeit, so daß hierdurch eine lineare Beziehung zwischen zurückgelegtem Weg und erhaltener Intensität erreicht werden kann. Dies läßt sich in praktischer Weise zum einen dadurch erreichen, daß bei konstanter Dicke des Mediums, in dem dieses beispielsweise als Quader ausgestaltet ist, vorgesehen ist, daß der Absorptionskoeffizient sich logarithmisch ändert, oder aber daß das Medium selbst eine logarithmisch veränderliche Dicke in Bewegungsrichtung des Körpers aufweist.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind.

Dabei zeigt bzw. zeigen:

Figuren 1 und 2     eine Anordnung zur Durchführung des erfindungsgemäßen Verfahrens mit zwei verschiedenen Ausführungsformen eines teildurchlässigen Mediums;

Figur 3     eine weitere Ausführungsform des teildurchlässigen Mediums; und

Figur 4     eine Ausgestaltung von teildurchlässigen Medien zur Messung von Bewegungen in einer Ebene.

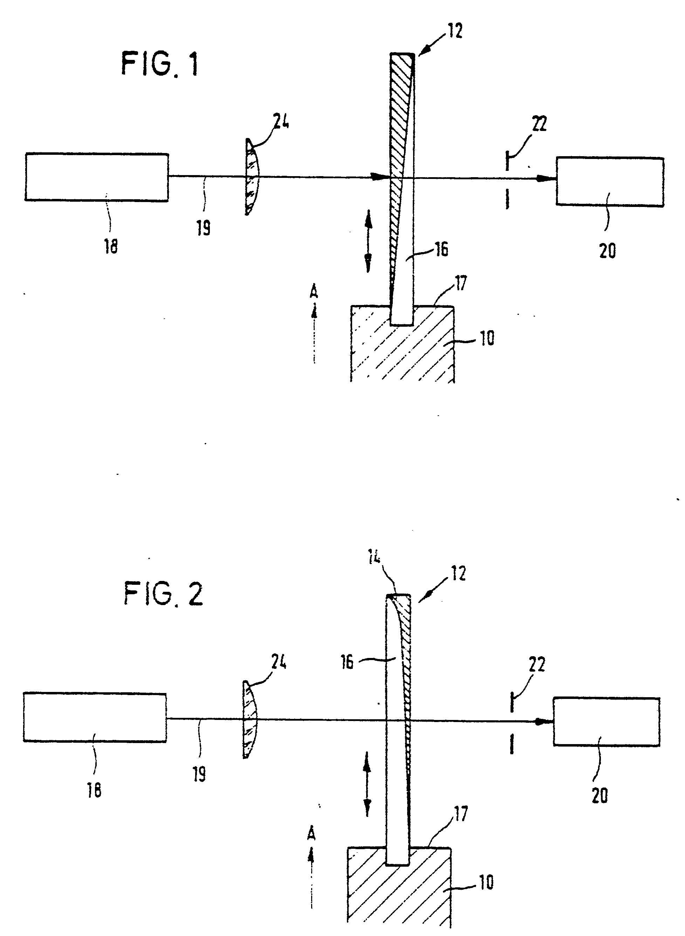

Zur Messung der Bewegung eines Körpers 10 bzw. einer Platte unter Einfluß von Druckwellen oder eines Schwingungen ausgesetzten Körpers wird auf diesem ein teildurchlässiges Medium mit in Bewegungsrichtung A des Körpers 10 veränderlicher Lichtdurchlässigkeit aufgesetzt. Im dargestellten Ausführungsbeispiel der Figur 1 handelt es sich um einen sogenannten Graukeil 12, der aus einem rechtwinkligen Dreikantprisma 14 aus Rauchglas und einem entsprechenden rechtwinkligen Dreikantprisma 16 aus völlig transparentem Material zu einem Quader zusammengesetzt ist. Das Dreikantprisma 14 verjüngt sich dabei von der Oberfläche 17 des Körpers 10 entlang der Bewegungsrichtung A. Der Graukeil 12 wird senkrecht zur Bewegungsrichtung A vom Licht eines Lasers durchstrahlt. Auf der dem Laser 18 entgegengesetzten Seite des Graukeils 12 ist ein Detektor 20 im Strahlengang des Lasers 18 angeordnet. Bei dem Detektor 20 kann es sich vorzugsweise um eine Fotodiode, einen Sekundärelektronenvervielfacher, um Fototransistoren oder dgl., handeln. Vor dem Fotodetektor 20 kann eine Blende 22 angeordnet sein. Zwischen dem Laser 18 und dem Graukeil 12 kann weiterhin eine Abbildungsoptik 24 vorgesehen sein, beispielsweise zur Erzielung eines geeigneten Durchmessers des Lichtstrahles 19. Bewegt sich nun der Körper 10 in Bewegungsrichtung A , so wird mit ihm der Graukeil 12 bewegt, wodurch der den Graukeil 12 durchstrahlende Laserstrahl 19 in seiner Intensität kontinuierlich veränderlich geschwächt wird. Die auf den Detektor auffallende Intensität des Lichtstrahls 19 ist daher ein direktes Maß für den Weg bzw. den Ort des Körpers 10.

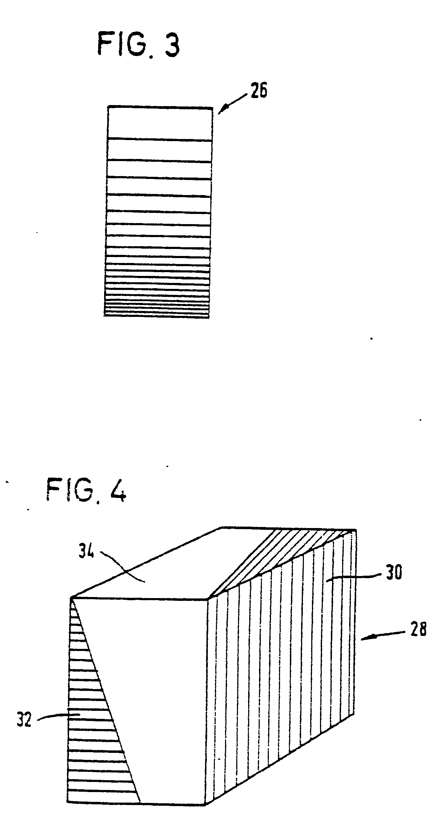

Da die durch einen Körper hindurchgelassene Lichtintensität (bei konstantem Absorptionskoeffizienten) exponentiell von der Dicke des Mediums abhängt, ist es zur Erzielung der linearen Abhängigkeit der durchgelassenen Lichtintensität vom Bewegungsweg des Körpers 10 sinnvoll, die Dicke des teildurchlässigen Teils eines solchen "Graukeils" sich logarithmisch ändern zu lassen, wie dies in der Figur 2 dargestellt ist. Statt einer geometrischen Veränderung der optischen Dichte des durchstrahlten Körpers über die Dicke desselben bzw. eines stark absorbierenden Teils desselben, besteht eine andere Möglichkeit darin, als zu durchstrahlenden Körper einen Körper 26 konstanter Dicke zu nehmen, bei dem sich lediglich der Absorptionskoeffizient in Bewegungsrichtung A ändert, wie dies in der Figur 3 angedeutet ist. Die Änderung des Absorptionskoeffizienten kann dabei ebenfalls entweder linear oder logarithmisch erfolgen.

Der Weg eines bewegten Körpers 10 kann mittels des erfindungsgemäßen Verfahrens nicht nur linear beobachtet werden, sondern beispielsweise auch in einer Ebene oder in allen drei Koordinaten-Richtungen des Raumes. Hierzu werden dann zwei bzw. drei winklig, insbesondere rechtwinklig, zueinanderstehende Anordnungen entsprechend der Figur 1 getroffen. Zur Messung des Weges in einer Ebene kann auch vorgesehen sein, daß lediglich ein durchstrahlter Körper 28 vorgesehen ist, dessen optische Dichte sich beispielsweise in zwei verschiedenen Spektralbereichen entlang senkrecht zueinanderstehender Richtungen verändert, wie dies in der Figur 4 angeordnet ist, wo zwei Dreikantprismen 30, 32, die ein Absorptionsvermögen in verschiedenen Spektralbereichen aufweisen, so zueinander angeordnet sind, daß sie sich in zueinander senkrecht stehenden Richtungen jeweils verjüngen. Zur Verbindung der beiden Dreikantprismen ist ein zwischenliegender vollständig bzw. weitgehend transparenter Teil 34 vorgesehen. In diesem Falle kann dann mit zwei Lichtquellen mit Wellenlängen, die jeweils im Absorptionsbereich der Dreikantprismen 30, 32 liegen, sowie

- 8 -

zugeordneten Detektoren gearbeitet werden. Ansonsten ist das Verfahren das Gleiche, wie es unter Bezugnahme auf Figur 1 beschrieben wurde.

p

DR. ING. HANS LICHTI · DIPL.-ING. HEINER LICHTI
DIPL.-PHYS. DR. JOST LEMPERT
PATENTANWÄLTE

D-7500 KARLSRUHE 41 (GRÖTZINGEN) · DURLACHER STR. 31 (HOCHHAUS)
TELEFON (0721) 48511

6317/62

Fraunhofer-Gesellschaft zur Förderung der angewandten Forschung e. V.

Leonrodstraße 54

D-8000 MÜNCHEN 19

## Patentansprüche

1. Verfahren zur optischen Messung eines Weges eines Körpers, wie einer Auslenkung, einer Schwingung eines Körpers oder dgl. mit mindestens einer Lichtquelle und mindestens einem Detektor, dadurch gekennzeichnet, daß mindestens ein Lichtstrahl durch ein Medium mit in Bewegungsrichtung veränderlicher optischer Dichte für das Licht der Lichtquelle unter einem endlichen Winkel zur Bewegungsrichtung gesandt wird und daß mittels des Detektors die Intensität des Lichtstrahls gemessen wird.

2. Verfahren nach Anspruch 1, dadurch gekennzeichnet, daß die der Lichtquelle abgewandte gegenüberliegende Fläche des Mediums verspiegelt ist und der Detektor auf der gleichen Seite des Mediums wie die Lichtquelle angeordnet ist.

- 2 -

3. Verfahren nach Anspruch 1 oder 2, dadurch gekennzeichnet, daß das Medium einen veränderlichen optischen Dichtegradienten hat.

4. Verfahren nach Anspruch 3, dadurch gekennzeichnet, daß die Dichte sich in Bewegungsrichtung logarithmisch verändert.

5. Verfahren nach einem der vorangehenden Ansprüche, dadurch gekennzeichnet, daß das Medium Quaderform aufweist.

6. Verfahren nach einem der vorangehenden Ansprüche, dadurch gekennzeichnet, daß das Medium mit veränderlicher optischer Dichte in Bewegungsrichtung einen veränderlichen Absorptionskoeffizienten aufweist.

7. Verfahren nach Anspruch 6, dadurch gekennzeichnet, daß der Absorptionskoeffizient sich logarithmisch ändert.

8. Verfahren nach einem der Ansprüche 1 bis 4, sowie 6 und 7, dadurch gekennzeichnet, daß das Medium in Bewegungsrichtung sich von einem zum anderen Ende hin verjüngt.

9. Verfahren nach Anspruch 6, dadurch gekennzeichnet, daß das durchstrahlte Medium keilförmig ausgebildet ist.

10. Verfahren nach Anspruch 8, dadurch gekennzeichnet, daß das durchstrahlte Medium logarithmisch veränderliche Dicke aufweist.

11. Verfahren nach einem der vorangehenden Ansprüche, dadurch gekennzeichnet, daß das Medium rotationssymmetrisch mit in radialer Richtung veränderlicher optischer Dichte ausgestaltet ist.

FIG. 1

FIG. 2

## FIG. 3

26

## FIG. 4

34

30

28

32